# EUROPEAN PATENT APPLICATION

(11) **EP 4 670 905 A1**
(43) Date of publication of application: **31.12.2025**
(21) Application number: 24780457.8
(22) Date of filing: 27.03.2024
(51) Int. Cl.: B23Q 1/64, B23Q 1/34, B23Q 1/72, B23Q 17/00

(54) **TABLE DEVICE OF MACHINE TOOL, AND MACHINE TOOL**

(30) Priority: 31.03.2023 JP 2023058144
(71) Applicant: Makino Milling Machine Co., Ltd., Tokyo 152-8578 (JP)
(72) Inventor: MATSUOKA, Masayuki, Minamitsuru-gun, Yamanashi 401-0310 (JP); TOBITA, Shoji, Minamitsuru-gun, Yamanashi 401-0310 (JP)
(74) Representative: Harvey, Alexander James
(86) International application number: PCT/JP2024/012263
(87) International publication number: WO 2024/204355

(57) **Abstract**

A table device (200) of a machine tool for placing a workpiece (W) has a rotary table (202) on which the workpiece is placed, a housing (206) in which a table support part (214) for supporting the table and first and second actuator attachment portions (216a, 216b) are integrally formed, an actuator (216, 218) for elastically deforming the housing by generating force in a direction in which the first and second actuator attachment portions moves away from or toward each other, and a table position control device (130) for controlling the position of the table by causing the actuator to generate the force for moving the first actuator attachment portion and the second actuator attachment portion away from or toward each other, thereby deforming elastically the housing.

## Description

### FIELD

The present invention relates to a table device configured to counteract tilting of a table due to the weight of a workpiece, and a machine tool provided with the table device.

### BACKGROUND

In the field of machine tools, horizontal machine tools are widely used. For example, Patent Literature 1 describes a horizontal machining center in which a workpiece is attached to a vertical workpiece mounting surface of a workpiece attachment member. In addition, Patent Literature 2 describes a horizontal machine tool provided with a rotary table rotatable around a horizontal rotational center axis.

### [CITATION LIST]

### [PATENT LITERATURE]

[PTL 1] WO 2019/053895
[PTL 2] JP 2007-296613 A

### SUMMARY

### [TECHNICAL PROBLEM]

In horizontal machine tools, while the weight of the workpiece attached to the table can cause the workpiece mounting member of Patent Literature 1 and the rotary table of Patent Literature 2 to tilt, resulting in machining errors, there is a problem in that such tilting of the workpiece mounting member and rotary table is difficult to correct.

A technical object of the present invention is to solve the problem relating to the prior art, and to provide a table device which can counteract tilting occurring due to the weight of a workpiece or jig placed on the table.

### [SOLUTION TO PROBLEM]

In order to achieve the above-mentioned object, according to the present invention, there is provided a table device for a machine tool for placing a workpiece thereon, comprising a table on which a workpiece is to be placed, a housing including a table support part for supporting the table, a first actuator mounting portion, and a second actuator mounting portion which are integrally formed, an actuator, attached to the first actuator mounting portion and the second actuator mounting portion, for elastically deforming the housing by generating a force in a direction which moves the first actuator mounting portion and the second actuator mounting portion away from or toward each other, and a table position control device for controlling the position of the table by causing the actuator to generate the force which moves the first actuator mounting portion and the second actuator mounting portion away from or toward each other, thereby elastically deforming the housing and changing the position or attitude of the table support part.

Further, according to the present invention, there is provided a machine tool comprising the table device, a spindle capable of holding a tool so as to face the table of the table device, a linear feed device which moves the table and the tool relatively in three orthogonal axis directions, and a control device which controls the linear feed device.

### [ADVANTAGEOUS EFFECTS OF INVENTION]

According to the present invention, the actuator elastically deforms the housing to change the position or attitude of the table support portion so as to control the position of the table, enabling the table to counteract the tilting thereof.

### BRIEF DESCRIPTION OF DRAWINGS

Figure 1 is a schematic illustration of a machine tool provided with a table device according to a preferred embodiment of the present invention.
Figure 2 is a schematic perspective view of the rear side of the table device of Figure 1.
Figure 3 is a schematic illustration of the table device for explaining the operation of the present invention.
Figure 4 is a schematic illustration of the table device for explaining the operation of the present invention.
Figure 5 is a schematic illustration of the table device for explaining the operation of the present invention.
Figure 6 is a schematic block diagram showing a first embodiment of a hydraulic cylinder control device as a table position control device and an example of a hydraulic source as a fluid pressure source.
Figure 7 is a schematic block diagram showing a second embodiment of a hydraulic cylinder control device as a table position control device and an example of a hydraulic source as a fluid pressure source.
Figure 8 is a schematic block diagram showing a third embodiment of a hydraulic cylinder control device as a table position control device and an example of a hydraulic source as a fluid pressure source.

### DESCRIPTION OF EMBODIMENTS

A preferred embodiment of the present invention will now be described with reference to the accompanying drawings.

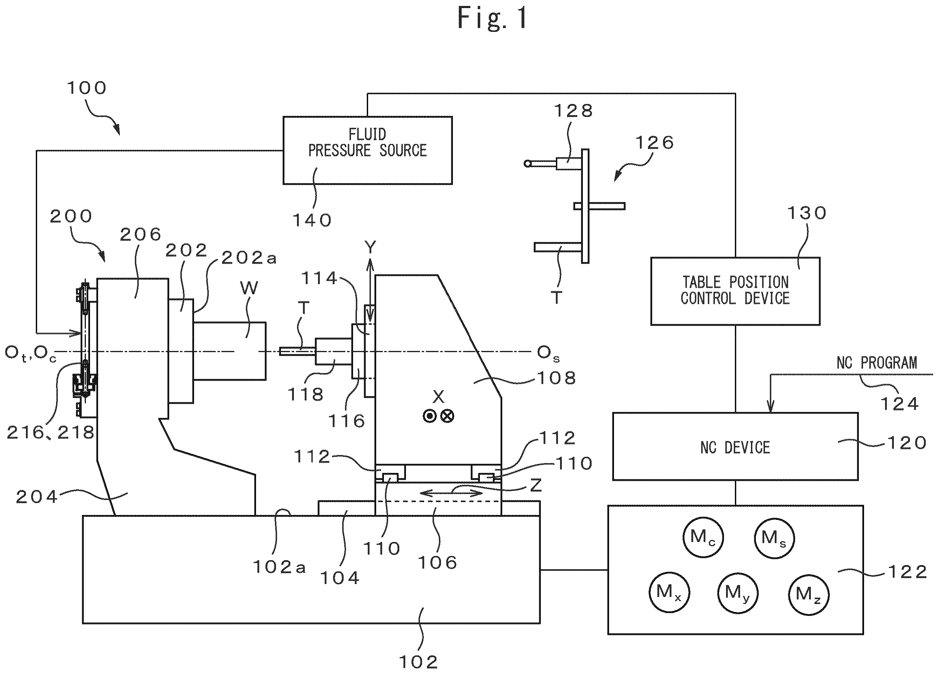

With reference to Figure 1, an example of a machine tool provided with a table device of the present invention is shown. In Figure 1, the machine tool 100 is a horizontal machining center. In this embodiment, the machine tool 100 is a four-axis processor having three linear feed axes (X-axis, Y-axis, Z-axis) and one rotary feed device (C-axis). The machine tool 100 may also be a five-axis machine tool having an A-axis or B-axis.

Machine tool 100 includes a bed 102 providing a base fixed to the floor of a factory, etc. A pair of Z-axis guide rails 104 are provided on the rear end side of an upper surface 102a of the bed 102, extending in the Z-axis direction (left-right direction in Figure 1), which is the horizontal front-rear direction, and a Z-slider 106 is provided for reciprocation along the Z-axis guide rails 104.

As a Z-axis linear feed device for driving the Z slider 106 reciprocatingly, there are provided a ball screw (not shown) extending in the Z-axis direction, a Z-axis servo motor Mz connected to one end of the ball screw, and a nut (not shown) mounted on the Z slider 106 for engaging with the ball screw.

A pair of X-axis guide rails 110 are provided on the upper surface of the Z slider 106, extending in the X-axis direction, which is the horizontal left-right direction (a direction perpendicular to the surface of the paper of Figure 1), and a column 108 is disposed for reciprocation along the X-axis guide rails 110.

As an X-axis linear feed device for driving the column 108 reciprocatingly, there are provided a ball screw (not shown) extending in the X-axis direction, an X-axis servo motor Mx connected to one end of the ball screw, and a nut (not shown) mounted on the column 108 for engaging with the ball screw.

A Y slider 114 is provided on the front surface of the column 108 for reciprocation in the Y-axis direction, which is the vertical direction. As a Y-axis linear feed device for driving the Y slider reciprocatingly, there are provided a ball screw (not shown) extending in the Y-axis direction, a Y-axis servo motor My connected to one end of the ball screw, and a nut (not shown) mounted on the Y slider 114 for engaging with the ball screw.

The Y-slider 114 supports a spindle head 116 for supporting a spindle 118 for rotation about a central axis Os extending in the Z-axis direction. A tool T is detachably attached to the tip of the spindle 118. The machine tool 100 may be provided with a tool magazine 126 for storing a plurality of tools T, and an automatic tool changer (not shown) for changing the tools T between the tool magazine 126 and the spindle 118.

A table device 200 is disposed on the front end side (left side in Figure 1) of the bed 102. The table device 200 includes a rotary table 202 facing the spindle 118, a base part 204 fixed to the upper surface 102a of the bed 102, and a housing part 206 formed integrally with the base part 204. The rotary table 202 has a mounting surface 202a on which the workpiece W is mounted. The mounting surface 202a is parallel to the vertical direction, and the workpiece W is mounted so as to extend horizontally from the mounting surface 202a. While it is not shown in detail, the workpiece W may be mounted on the mounting surface 202a of the rotary table 202 via a pallet (not shown). When the workpiece W is mounted using a pallet, taper cones (not shown) for positioning the pallet, a clamper (not shown) for gripping the pallet, and etc. are provided on the mounting surface 202a of the rotary table 202. The workpiece W may be mounted directly on the mounting surface 202a of the rotary table 202 using such as a jig (not shown).

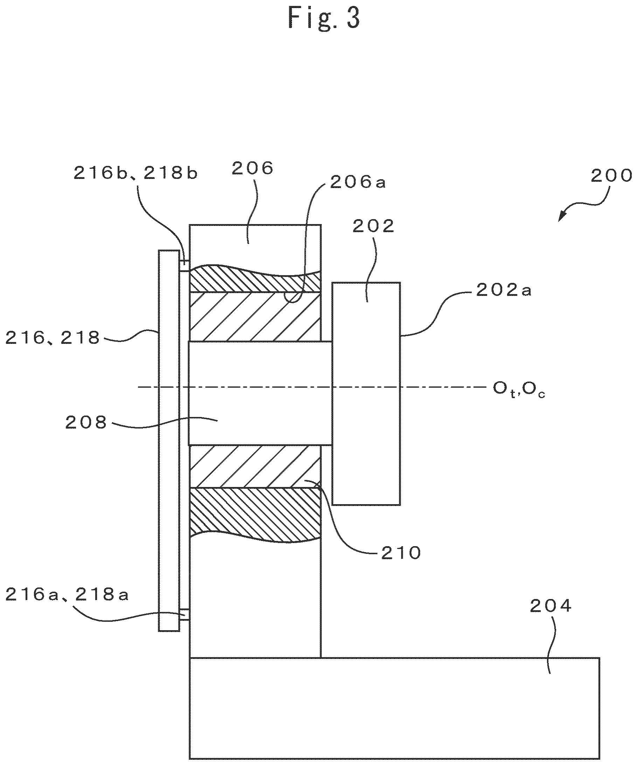

The rotary table 202 has a cylindrical rotary shaft 208 extending from an end surface opposite to the mounting surface 202a, and the table device 200 includes a support part 210 (see Figure 3) for supporting the rotary shaft 208 for rotation about an axis Oc (the axis of the C-axis) extending in the Z-axis direction, and a servo motor (C-axis motor) 212 for rotationally driving the rotary table 202. The support part 210 may be formed by a bearing for rotatably supporting the rotary shaft 208, for example, a plurality of radial ball bearings or angular ball bearings which are spaced apart in the direction of the axis Oc. The support part 214 is fitted into a bore 206a (see Figure 3) formed in the housing part 206. Accordingly, the table device 200 provides a C-axis feed device, i.e., a rotary feed device around the axis Oc.

The machine tool 100 further includes an NC device 120 for controlling respectively the servo motors Mx, My, Mz of the linear feed devices for the three orthogonal axes, i.e., the X-axis, the Y-axis, and the Z-axis, the servo motor Mc of the C-axis feed device, and the servo motor Ms of the spindle 118. The NC device 120 controls servo motors 122 of the X-axis, Y-axis, and Z-axis linear feed devices, the C-axis feed device, and the spindle 118 in accordance with an NC program 124 received from a CAM (not shown) to machine a workpiece W attached to a rotary table 202.

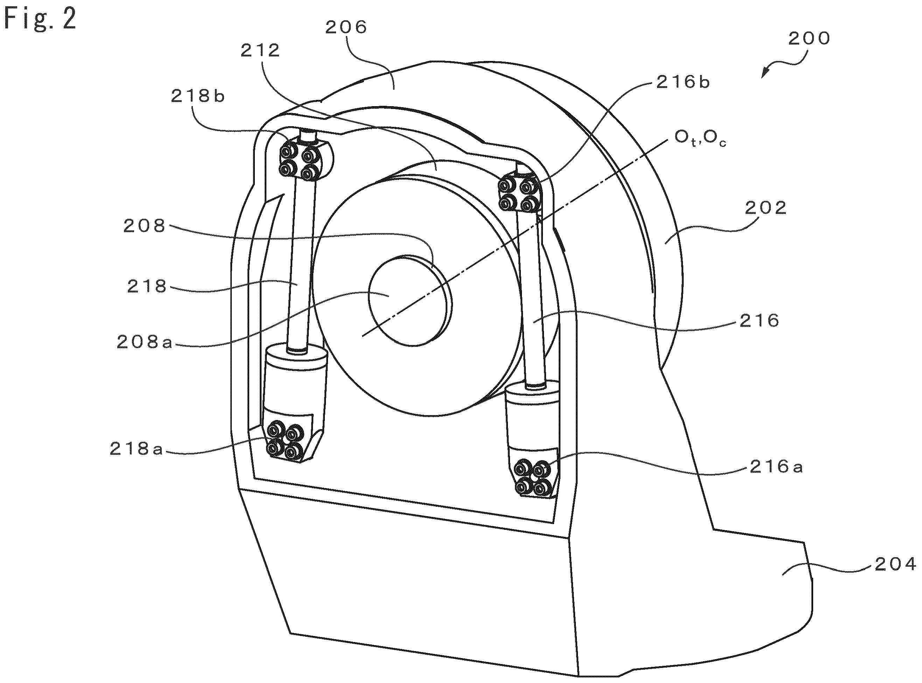

The table device 200 further includes one or more actuators. In the embodiment shown in Figure 2, the rotary table 202 includes two actuators 216, 218. In this case, the two actuators 216, 218 are spaced apart from each other in the X-axis direction with the rotation axis 208 therebetween.

The actuators 216, 218 are attached to the rear side, i.e., the opposite side of the housing part 206 to the rotary table 202 in the direction of the axis Oc of the C-axis, by means of first attachment portions 216a, 218a and second attachment portions 216b, 218b, respectively. The first attachment portions 216a, 218a and the second attachment portions 216b, 218b are spaced apart in the vertical direction with the rotary shaft 208 therebetween.

In this embodiment, the actuators 216, 218 may be linear actuators configured to retract when energized, i.e., move the first mounting portions 216a, 218a and the second mounting portions 216b, 218b closer to each other. The linear actuators may be hydraulic or pneumatic fluid pressure cylinders which retract when hydraulic or pneumatic pressure is supplied. The linear actuators may be composed of a ball screw and a servo motor.

The first mounting portions 216a, 218a and the second mounting portions 216b, 218b of the actuators 216, 218 may be disposed on the housing part 206 rearwardly from the support part 210 in the direction of the axis Oc, as shown in Figures 2-5.

Further, in the case where the actuators 216, 218 are attached to the rear side of the housing part 206, they may be disposed at positions closer to the rotary table 202 than the end surface 208a of the rotary shaft 208, as shown in Figure 2. Alternatively, the actuators 216, 218 may be disposed at positions farther away from the rotary table 202 than the end surface 208a, as shown in Figures 3-5.

Furthermore, the first mounting portions 216a, 218a and the second mounting portions 216b, 218b of the actuators 216, 218 may be disposed on the front side, i.e., on the side surface of the housing part 206 close to the rotary table 202 in the direction of the axis Oc. In this case, the actuators 216, 218 are formed by linear actuators configured to extend, when energized, i.e., move the first mounting portions 216a, 218a and the second mounting portions 216b, 218b away from each other.

When a single actuator is provided, the actuator must be placed in the center in the X-axis direction in order to achieve balanced deformation, and therefore so a space is required in the Z-axis direction. The space in the Z-axis direction can be reduced by using multiple actuators, disposing them spaced in the X-axis direction with the rotating shaft 208 therebetween and closer to the rotary table 202 than the end surface 208a of the rotating shaft 208.

In this embodiment, the actuators 216, 218 are formed by hydraulic cylinders configured retract when energized, and the machine tool 100 further includes a fluid pressure source 140 as a driving device for the actuators 216, 218, and a table position control device 130 for controlling the fluid pressure source 140. The table position control device 130 may be formed by a computer and associated software, including a CPU (Central Processing Unit), a memory device such as a RAM (Random Access Memory) or a ROM (Read Only Memory), a storage device such as a HDD (Hard Disk Drive) or an SSD (Solid State Drive), an input/output port and a bidirectional bus for interconnecting these.

With reference to Figures 3 to 5, which are schematic illustrations of the table device 200 for explaining the operation of the embodiment, when a workpiece W is not mounted on the rotary table 202, the central axis Ot of the rotary table 202 and the rotary shaft 208 coincides with the axis Oc of the C-axis, as shown in Figure 3.

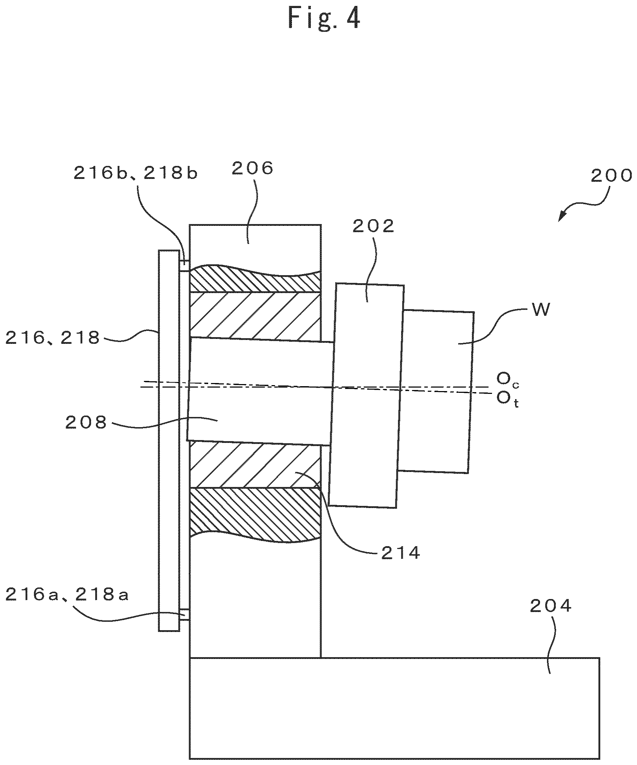

When a workpiece W is mounted on the rotary table 202, the weight of the workpiece W acts on the rotary table 202 and the rotating shaft 208, and as shown in Figure 4, the rotary table 202 and the rotating shaft 208 tilt so that the rotary table 202 side is lowered, and the central axis Ot of the rotary table 202 and the rotating shaft 208 does not coincide with the axis Oc of the C-axis. This misalignment between the central axis Ot of the rotary table 202 and the rotating shaft 208 and the axis Oc of the C-axis cannot be corrected by the linear feed devices for the X-axis, Y-axis and Z-axis.

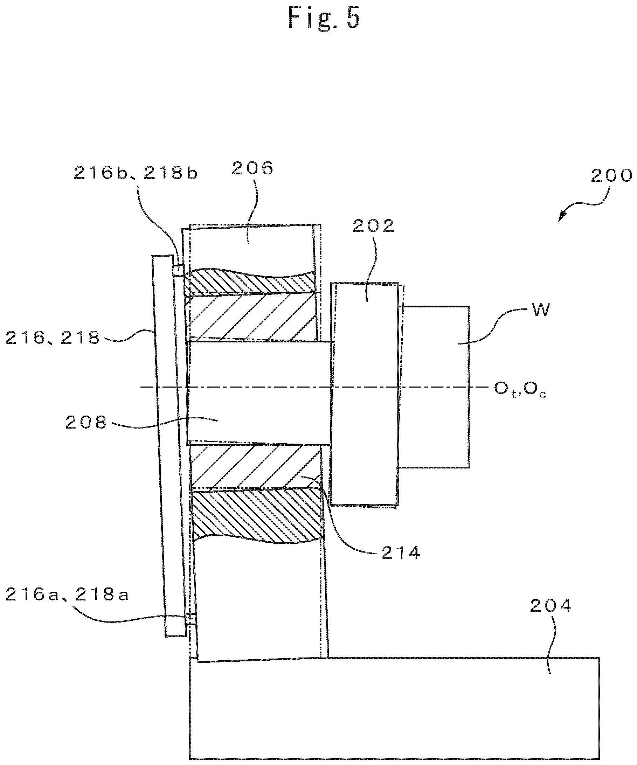

In this embodiment, the hydraulic pressure is supplied from the fluid pressure source 140 to the actuators 216, 218 to retract the actuators 216, 218 so as to tilt the housing part 206 rearward as shown by the solid line in Figure 5, thereby elastically deforming the housing part 206 to cancel the tilting of the rotary table 202 and the rotary shaft 208, thereby aligning the central axis Ot of the rotary table 202 and the rotary shaft 208 with the axis Oc of the C-axis, or reducing the difference therebetween within the allowable error range. Since the second actuator mounting parts 216b, 218b are disposed in the upper portion of the housing part 206, and the first actuator mounting parts 216a, 218a are disposed in a portion of the housing part 206 near the base part 204 fixed to the upper surface 102a of the bed 102, the housing part 206 can be tilted rearward by supplying hydraulic pressure to the actuators 216, 218. Incidentally, for the purpose of comparison, the state of the rotary table 202, the rotation shaft 208, and the housing part 206 before the workpiece W is mounted on the rotary table 202 is shown by two-dot chain lines in Figure 5.

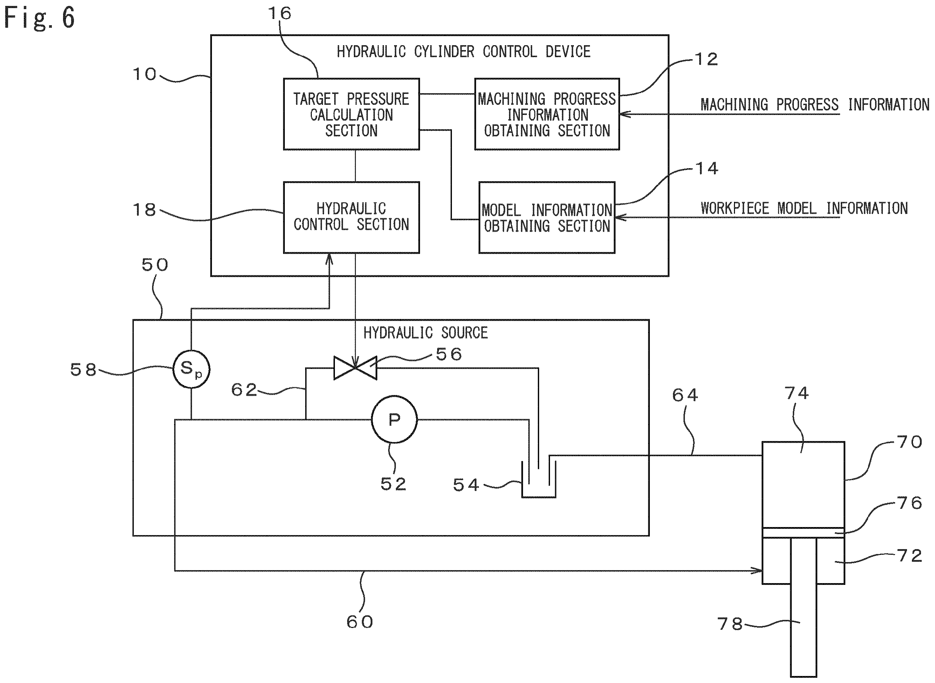

With reference to Figure 6, an example of the table position control device 130 and the fluid pressure source 140 of Figure 1 is shown. In Figure 6, a hydraulic source 50 according to one embodiment of the fluid pressure source 140 includes a pump 52, a tank 54, a pressure control valve 56 and a pressure sensor 58 as main components.

The pump 52 supplies hydraulic oil, drawn from the tank 54, to a retraction side pressure chamber 72 of a hydraulic cylinder 70, which forms the actuators 216, 218, through a supply conduit 60. While one hydraulic cylinder 70 is illustrated in Figures 6-8, this represents one or more actuators. For example, when two actuators 216, 218 are provided as in the above-described embodiment, two hydraulic circuits shown in Figures 6-8 may be provided. When a plurality of systems of the hydraulic circuit are provided, the hydraulic oil may be supplied to the respective hydraulic cylinder at different pressure, or the hydraulic oil may be supplied to all hydraulic cylinders at the same pressure.

The pressure control valve 56 is disposed in a return line 62 branching off from the supply conduit 60, and controls the pressure in the supply conduit 60 by adjusting the flow rate of the hydraulic oil discharged from the supply conduit 60 to the tank 54. The pressure sensor 58 detects the pressure in the supply conduit 60.

In this embodiment, the hydraulic cylinder control device 10 providing the table position control device 130 includes a machining progress information obtaining section 12, a model information obtaining section 14, a target pressure calculation section 16, and a hydraulic pressure control section 18 as main components.

The machining progress information obtaining section 12 obtains machining progress information from the NC device 120. The machining progress information may include an NC program and a program number being executed by the NC device 120. The model information obtaining section 14 obtains workpiece model information from, for example, a CAD device (not shown). The workpiece model information may include information relating to the shape of the unprocessed workpiece W.

The target pressure calculation section 16 perceives how far the machining process has progressed, i.e., the progress of the machining process, based on the machining progress information obtained from the machining progress information obtaining section 12. The target pressure calculation section 16 further calculates the amount of material removed (amount of chips generated) and the position where chips are generated, based on the perceived progress of the machining process and information on the shape of the workpiece W obtained from the model information obtaining section 14, and calculates the magnitude and direction of the tilting according to the progress of the machining process.

The target pressure calculation section 16 further calculates a target pressure to be supplied to the hydraulic cylinder 70 forming the actuators 216, 218, based on the magnitude and direction of the tilting. An experiment may be performed in advance in which weights of various masses are attached to the rotary table 202 and the pressure supplied to the hydraulic cylinder 70 is adjusted so that the central axis Ot of the rotary table 202 and the rotary shaft 208 is aligned with the axis Oc of the C-axis or the difference therebetween falls within an allowable error range, and storing the relationship between the mass of the weight and the pressure in the table position control device 130 in the form of a table or formula, and the target pressure may be calculated based on the relationship.

The hydraulic pressure control section 18 is connected to a pressure control valve 56 and a pressure sensor 58 of the hydraulic source 50, and controls the opening of the pressure control valve 56 so that the pressure in the supply conduit 60 becomes a target pressure. The pressure control valve 56 may be formed, for example, of a proportional solenoid valve.

When the target pressure is supplied to the retraction-side pressure chamber 72 of the hydraulic cylinder 70, a piston 76 is pressed by hydraulic oil at the target pressure, and a rod 78 connected to the piston 76 retracts. This causes the housing part 206 to tilt.Then, the hydraulic oil in the extension-side pressure chamber 74 is discharged into the tank 54 through a discharge conduit 64. Further, when the pump 52 stops, the housing part 206 elastically returns to its original shape, and the rod 78 is drawn from the cylinder. Thereafter, the hydraulic oil is sucked from the tank 54 into the extension-side pressure chamber 74.

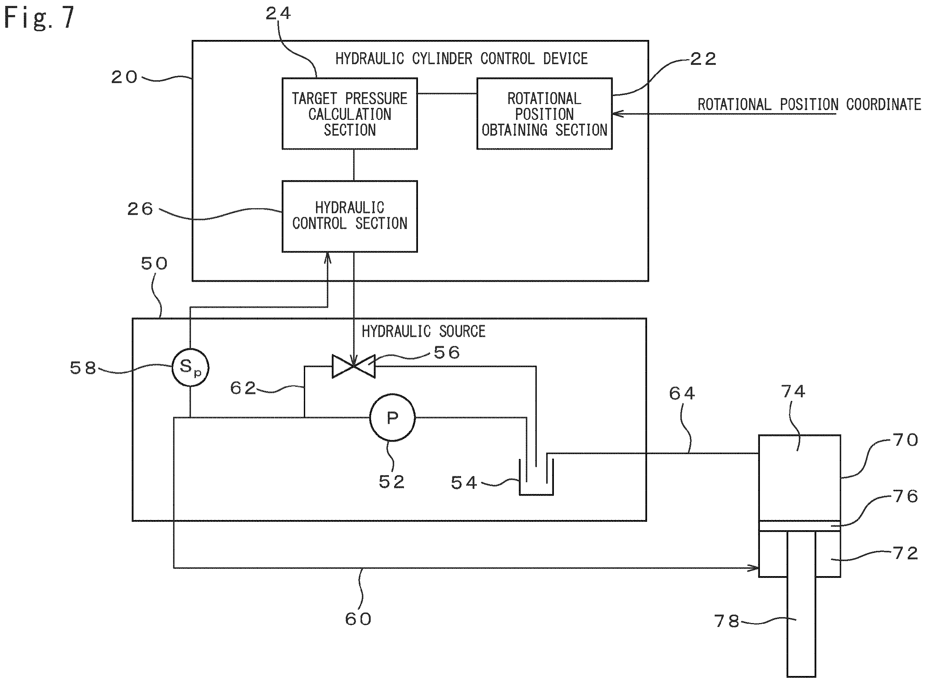

With reference to Figure 7, a hydraulic cylinder control device 20 according to a second embodiment is shown. In the embodiment of Figure 7, the hydraulic source 50 is configured similarly to the hydraulic source 50 of Figure 6, and therefore a duplicated description will be omitted.

In Figure 7, the hydraulic cylinder control device 20 includes, as main components, a rotational position obtaining section 22, a target pressure calculation section 24, and a hydraulic pressure control section 26. The rotational position obtaining section 22 obtains the current rotational position of the rotary table 202, i.e., the coordinate value of the C-axis, from the NC device 120.

The target pressure calculation section 24 obtains the relationship between the rotational position of the rotary table 202 and the target pressure in advance through an experiment for a specific workpiece W to be machined, and stores the relationship in the form of a table or a formula. The hydraulic pressure control section 26 is connected to the pressure control valve 56 and the pressure sensor 58 of the hydraulic source 50, and controls the opening of the pressure control valve 56 so that the pressure in the supply pipe 60 becomes the target pressure. This makes it possible to cancel or minimize the tilting of the rotary table 202 and the rotary shaft 208, which changes depending on, for example, the height of the workpiece W.

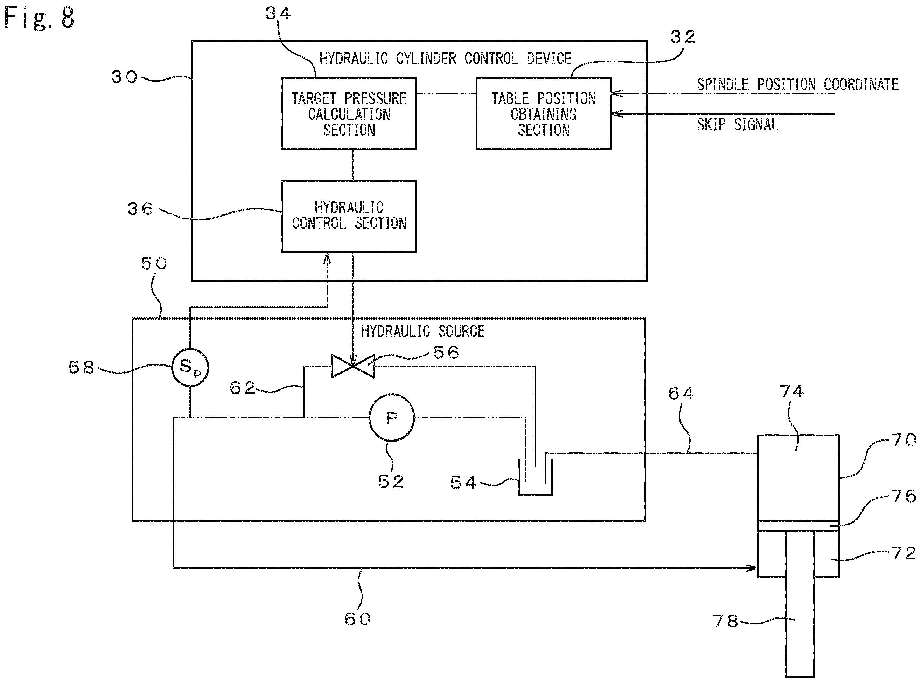

With reference to Figure 8, a hydraulic cylinder control device 30 according to a third embodiment is shown. In the embodiment of Figure 8, the hydraulic source 50 is configured similarly to the hydraulic source 50 of Figure 6, and therefore a duplicated description will be omitted.

The hydraulic cylinder control device 20 according to the second embodiment obtains the coordinate value of the C-axis from the NC device 120 and controls the hydraulic pressure based on the coordinate value. The hydraulic cylinder control device 30 according to the third embodiment controls the pressure supplied to the hydraulic cylinder 70 based on table position information obtained by measuring the position of a predetermined part of the workpiece W attached to the table device 200 or the rotary table 202 with a sensor.

The sensor may be, for example, a touch probe 128. With reference to Figure 1, the touch probe 128 may be automatically attached to the end of the spindle 118 by an automatic tool changer (not shown) of the machine tool 100 when the machine tool 100 is provided with a tool magazine 126. Alternatively, the touch probe 128 may be manually attached to the end of the spindle 118 by an operator.

In Figure 8, the hydraulic cylinder control device 30 includes as its main components a table position obtaining section 32, a target pressure calculation section 34, and a hydraulic pressure control section 36. The table position obtaining section 32 is connected to the touch probe 128 via wired or wireless communication, and receives a skip signal generated by the touch probe 128 when the touch probe 128 comes into contact with a predetermined portion of the workpiece W mounted on the table device 200 or the rotary table 202.

The touch probe 128 is attached to the end of the spindle 118, and an automatic measurement program is executed to measure the tilting in the Z-axis direction tilting at several points along the height direction in the vertical plane of the rotary table 202 or the vertical plane of the workpiece W to obtain table position information. This makes it possible to verify how much position adjustment is required. The measurement may be performed before machining, or may be performed as appropriate according to the progress of the machining process.

The table position obtaining section 32 also receives, from the NC device 120, the coordinate values of the spindle 118 when the skip signal is received, i.e., the coordinate values of the feed devices of the X-axis, Y-axis, and Z-axis, as the table position.

The target pressure calculation section 34 obtains the relationship between the table position and the target pressure in advance through experiments for a specific workpiece W to be machined, and stores it in the form of a table or a formula. The hydraulic pressure control section 36 is connected to the pressure control valve 56 and the pressure sensor 58 of the hydraulic source 50, and controls the opening of the pressure control valve 56 so that the pressure in the supply conduit 60 becomes the target pressure. This makes it possible to cancel or minimize the tilting of the rotary table 202 and rotary shaft 208, which changes depending on the table position, for example.

Incidentally, while the hydraulic source 50 is shown as the fluid pressure source 140 in Figures 6-8, if the actuators 216, 218 are formed by pneumatic cylinders, the pump 52 of the hydraulic source 50 can be a pump (compressor) configured to pressurize the air.

While in the embodiment described above, the workpiece W is mounted on the mounting surface 202a of the C-axis rotary table 202 so as to extend in the horizontal direction, the present invention is not limited to this. The effect of the present invention can be obtained in any configuration in which tilting occurs when the workpiece W is attached. For example, the workpiece W may be mounted on a non-rotating workpiece mounting member having a vertical mounting surface. The workpiece may be mounted on any of the top, bottom, or side surfaces of a table, pallet, or jig. An L-shaped jig may be attached to the mounting surface 202a, and the workpiece W may be placed on the horizontal surface of the L-shaped jig.

### DESCRIPTION OF REFERENCE SIGNS

- 10: Hydraulic Cylinder Control Device
- 12: Machining Progress Information Obtaining Section
- 14: Model Information Obtaining Section
- 16: Target Pressure Calculation Section
- 18: Hydraulic Control Section
- 20: Hydraulic Cylinder Control Device
- 22: Rotational Position Obtaining Section
- 24: Target Pressure Calculation Section
- 26: Hydraulic Control Section
- 30: Hydraulic Cylinder Control Device
- 32: Table Position Obtaining Section
- 34: Target Pressure Calculation Section
- 36: Hydraulic Control Section
- 50: Hydraulic Source
- 52: Pump
- 54: Tank
- 56: Pressure Control Valve
- 58: Pressure Sensor
- 60: Supply Line
- 62: Return Line
- 64: Discharge Line
- 70: Hydraulic Cylinder
- 72: Retraction Side Pressure Chamber
- 74: Extension Side Pressure Chamber
- 76: Piston
- 78: Rod
- 100: Machine Tool
- 102: Bed
- 102a: Top Surface
- 104: Z-Axis Guide Rail
- 106: Z Slider
- 108: Column
- 110: X-Axis Guide Rail
- 114: Y Slider
- 116: Spindle Head
- 118: Spindle
- 120: NC Device
- 122: Servo Motor
- 124: NC Program
- 126: Tool Magazine
- 128: Touch Probe
- 130: Table Position Control Section
- 140: Fluid Pressure Source
- 200: Table Device
- 202: Rotary Table
- 202a: Mounting Surface
- 204: Base Section
- 206: Housing Section
- 206a: Bore
- 208: Rotary Shaft
- 208a: Tip Surface
- 210: Support Section
- 212: Servo Motor (C-Axis Motor)
- 214: Support Section
- 216: Actuator
- 216a: First Mounting Section
- 216b: Second Mounting Section
- 218: Actuator
- 218a: First Mounting Section
- 218b: Second Mounting Section

## Claims

1. A table device for a machine tool for placing a workpiece thereon, comprising:
a table on which a workpiece is to be placed;
a housing including a table support part for supporting the table, a first actuator mounting portion, and a second actuator mounting portion which are integrally formed;
an actuator, attached to the first actuator mounting portion and the second actuator mounting portion, for elastically deforming the housing by generating a force in a direction which moves the first actuator mounting portion and the second actuator mounting portion away from or toward each other; and
a table position control device for controlling the position of the table by causing the actuator to generate the force which moves the first actuator mounting portion and the second actuator mounting portion away from or toward each other, thereby elastically deforming the housing and changing the position or attitude of the table support part.

2. The table assembly of claim 1, further comprising at least one rotary feed device for rotating the table.

3. The table apparatus according to claim 2, wherein the table position control device changes the magnitude of the force generated by the actuator in accordance with the position of the rotary feed device.

4. The table apparatus according to claim 1, wherein the table position control device changes a magnitude of the force generated by the actuator in accordance with a progress of the machining process of the workpiece.

5. The table device according to claim 4, wherein the table position control device perceives the progress of the machining process of the workpiece from an NC program and model information of the workpiece.

6. The table device according to claim 1, wherein the table position control device changes a magnitude of the force generated by the actuator in response to table position information obtained by measuring a predetermined portion of the table device or a predetermined portion of a workpiece.

7. The table device according to claim 2, wherein a central axis of rotation of the rotary feed device extends in a first horizontal direction, the actuators are multiple, and the multiple actuators are spaced apart in a second horizontal direction perpendicular to the first horizontal direction on either side of the central axis of rotation.

8. The table device according to claim 2, wherein the first actuator mounting portion is disposed below the central axis of rotation of the rotary feed device, and the second actuator mounting portion is disposed above the central axis of rotation of the rotary feed device.

9. A machine tool comprising:
a table device according to claim 1;
a spindle capable of holding a tool facing the table of the table device;
a linear feed device which moves the table and the tool relatively in three orthogonal axis directions; and
a control device which controls the linear feed device.
